# EUROPEAN PATENT APPLICATION

(11) **EP 4 700 438 A1**
(43) Date of publication of application: **25.02.2026**
(21) Application number: 25193370.1
(22) Date of filing: 01.08.2025
(51) Int. Cl.: G01S 17/66, G01S 17/933, G06T 7/73

(54) **3D SENSOR DATA BASED AIRCRAFT DETECTION, TRACKING, AND DOCKING**

(30) Priority: 16.08.2024 IN 202411062103
(71) Applicant: Honeywell International Inc., Charlotte, NC 28202 (US)
(72) Inventor: SHARMA, Manuj, Charlotte, 28202 (US); DAS, Shouvik, Charlotte, 28202 (US); KARUMURI, Sukumar, Charlotte, 28202 (US); BHAT, Kiran, Charlotte, 28202 (US)
(74) Representative: Haseltine Lake Kempner LLP

(57) **Abstract**

Devices, methods, and systems for aircraft detection, tracking, and docking using three dimensional sensor data are described herein. One method includes capturing, by a light detection and ranging (LIDAR) sensor, LIDAR sensor data of an aircraft while the aircraft is approaching a docking area of an airport, receiving, from the LIDAR sensor, the sensor data of the aircraft while the aircraft is approaching a docking area, retrieving, by a computing device, a simulated two dimensional image of the aircraft generated based on simulated data of the aircraft, tracking, by the computing device, a position of the aircraft while the aircraft is approaching the docking area using the LIDAR sensor data and the simulated two dimensional image, and displaying an image including the position of the aircraft while the aircraft is approaching the docking area to provide navigation guidance to a pilot.

## Description

### Technical Field

The present disclosure relates generally to devices, methods, and systems for aircraft detection, tracking, and docking using three dimensional sensor data.

### Background

Airports accommodate millions of travelers every day via incoming and outgoing flights at varying times. The arrival and departure of these aircraft must be planned accordingly to provide a safe and timely travel experience. Airport gates on the airside of an airport can be characterized as docking stations or parking spaces that are designed to enable the parking of aircraft. When aircraft are positioned within these docking areas, the ingress and egress of passengers is enabled. Airports often are set up to accommodate aircraft of varying dimensions (e.g., based on wingspan, fuselage length) and, in many situations, navigating these aircraft to the appropriate docking area presents a number of issues related to the size-constraint of a typical docking station as well as the presence of numerous obstacles within the docking areas themselves. Hazards associated with aircraft maneuvering and parking, therefore, make the accuracy of aircraft position within a docking area more critical.

Aircraft pilots are provided with a number of tools to help guide them in maneuvering and parking aircraft within a docking area. Visual guidance can be provided by a marshal or wing-watcher, illuminated lights on the tarmac, or centerlines directing aircraft on a particular path toward a docking area. A marshal aligns the nose wheel with a guidance line (e.g., centerline) and designates when to stop the aircraft at the designated stop position. Wing-watchers stop movement of any ground vehicles in proximity to the aircraft and ensure clearance of wingtips from any obstacles.

Manual approaches to these repetitive tasks have long been error prone and consistency in visual guidance to pilots from different parts of the world has been problematic. Accordingly, there has been movement toward using automated systems for some of these tasks or to assist in the guidance of the aircraft have seen the need for an automated system. Such systems are generally referred to as - Docking Guidance Systems (DGS).

Early approaches to DGS leveraged mirrors but posed significant limitations and distracted the pilot. Subsequent approaches to DGS leveraged intrusive technologies like induction loops, again with significant limitations.

Regulatory requirements too evolved and as technologies became more capable, DGS system evolved from being Visual Docking Guidance Systems (VDGS) to Advanced Visual Docking Guidance Systems (A-VDGS). This included providing active azimuth guidance with deviation calculated by the system. Further various aircraft models (types/sub-types) got introduced to meet the demand for air travel and airports equally adopted more complicated gate designs, like Multiple Aircraft Ramp Stands (MARS).

### Brief Description of the Drawings

Figure 1 illustrates a side view of a sensor arrangement in accordance with one or more embodiments of the present disclosure.
Figure 2 illustrates a top view of captured sensor data of an incoming aircraft in accordance with an embodiment of the present disclosure.
Figure 3 illustrates an example of simulated LIDAR data in accordance with an embodiment of the present disclosure.
Figure 4 illustrates an example of simulated LIDAR data in accordance with an embodiment of the present disclosure.
Figure 5 illustrates an example of a simulated image in accordance with an embodiment of the present disclosure.
Figure 6 illustrates a flow diagram of a method for detecting, tracking, and docking an aircraft in accordance with an embodiment of the present disclosure.
Figure 7 illustrates a system for use in detecting, tracking, and docking an aircraft in accordance with an embodiment of the present disclosure.

### Detailed Description

Devices, methods, and systems for detection, tracking, and docking an aircraft using three dimensional data are described herein. A number of embodiments include capturing, by a light detection and ranging (LIDAR) sensor, LIDAR sensor data of an aircraft while the aircraft is approaching a docking area of an airport and receiving, from the LIDAR sensor, the sensor data of the aircraft while the aircraft is approaching the docking area. A simulated two dimensional image of the aircraft generated based on simulated data of the aircraft is retrieved by a computing device. A position of the aircraft while the aircraft is approaching the docking area using the LIDAR sensor data and the simulated two dimensional image is tracked by the computing device. An image including the position of the aircraft while the aircraft is approaching the docking area is displayed to provide navigation guidance to a pilot.

Based on the increased use of air travel, airports are seeing an increasing number of aircraft movements per day. Accurate tracking and detection of these aircraft is essential to maintain a safe and efficient travel operation. Conventional docking guidance systems are limited by a fixed field of view. They are often influenced by weather and visibility conditions resulting in incomplete guidance information.

Airports also use systems that relay information to the pilots for managing aircraft movement in areas further away from the ramp area and use lasers to track an aircraft's movement on the ground. Conventional laser systems, however, can have issues with a curved approach of an aircraft to a docking area. Further, kinematic models describing the aircraft motion are difficult to implement for tracking aircraft around curved centerlines or while the aircraft is making a turn. Laser systems can also be influenced by field obstructions due to inclement weather, reduced visibility, and the fixed positioning of laser sensors within a docking area. Also, they do not generate images for use by the system, so there are no image archives for incident analysis, among other issues.

Because of the above issues, airports using these systems face failed dockings where the aircraft is too far forward or back from the ramp, not parallel with or aligned with the centerline or not positioned on the centerline, which may cause delays and additional adjustments by the pilot and ground crew to make the aircraft and ramp line up despite improper positioning of the aircraft. This can be particularly problematic in multiple taxiway systems, where precision is even more important.

Embodiments of the present disclosure address the above and other issues by combining three dimensional data sensing with a machine learning model using simulated LIDAR sensor returns. For example, embodiments of the present disclosure can simulate a three dimensional model of an aircraft and project it on a two dimensional image of an aircraft to generate a complete model of an aircraft that can be displayed directly to a pilot to provide navigation guidance as the aircraft approaches the docking area. Embodiments of the present disclosure can also provide increased accuracy in tracking aircraft over curved centerlines or when an aircraft is taking a turn. Further, the embodiments described herein can be beneficial in aircraft detection at all times during the day and night, in all weather conditions, in all lighting conditions, and for aircraft of varying size and shape, unlike prior systems.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that mechanical, electrical, and/or process changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

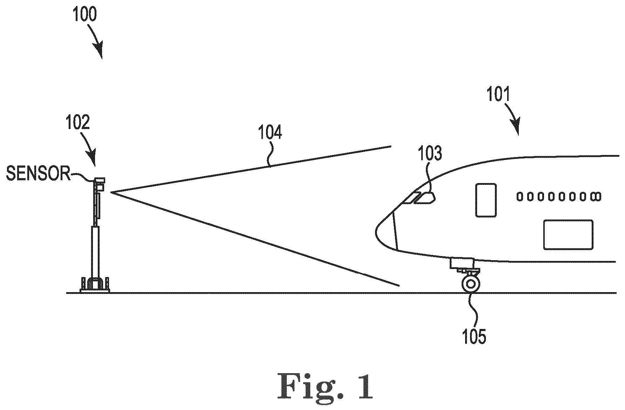

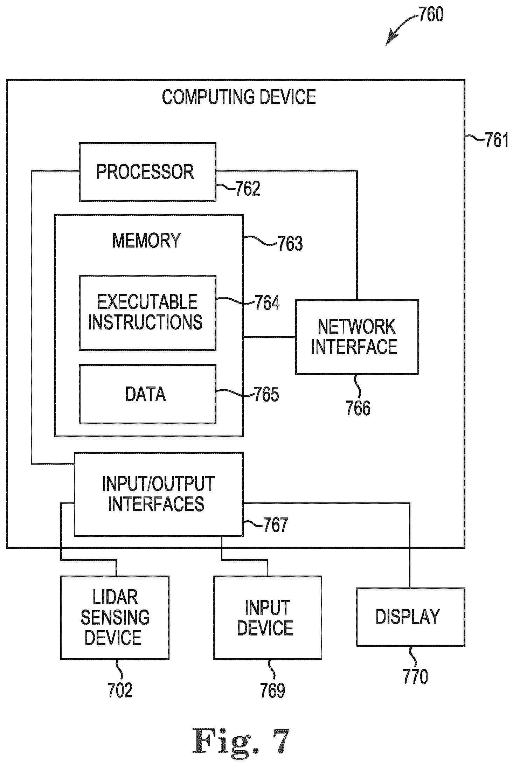

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be referenced as 702 in Figure 7.

As used herein, "a", "an", or "a number of" something can refer to one or more such things, while "a plurality of" something can refer to more than one such things. For example, "a number of images" can refer to one or more images, while "a plurality of images" can refer to more than one image.

Figure 1 illustrates a side view of a sensor arrangement in accordance with one or more embodiments of the present disclosure. Figure 1 shows a sensor arrangement in relation to an aircraft within a docking area 100 of an airport. The "docking area" as used herein refers to an area located on the airside apron of a gate at an airport in which an aircraft parks. The docking area can include the tarmac leading up to the final parking position of the aircraft. The docking area can also include a target area of interest for capturing data corresponding to the aircraft as the aircraft approaches a docking area.

Data of an incoming aircraft 101 can be captured by a sensor 102 as the aircraft approaches the docking area 100. The sensor 102, for example, may be a LIDAR sensor with a field of view 104 that has a vertical spread in addition to a horizontal spread. The sensor 102 may be positioned accordingly so that the field of view 104 includes at least a portion of the incoming aircraft 101 in relation to the ground surface of the docking area. Different sensor arrangements are possible such that more than one sensor may be used to capture data of the incoming aircraft from different locations within the docking area. The field of view 104 of the sensor 102 can be adjusted either manually or electronically to capture different vantage points.

Characteristics of the aircraft 101, such as a position of the aircraft wheel 105 and position of pilot windows 103 can be ascertained from the data captured by the sensor 102 depending on the angle of approach of the aircraft 101 to the sensor 102. The data captured can also indicate positioning of the wheel in relation to a stop point of the docking area 100. The captured sensor data can gauge the distance of the aircraft 101 to a stop point to determine navigation guidance for the pilot as the aircraft approaches the docking area.

The captured data from the sensor may also include information corresponding to the position of the incoming aircraft in relation to a centerline on the surface of the tarmac which can indicate to the pilot the correct path to follow with respect to correct positioning and orientation of the aircraft within the docking area. There may be more than one centerline used for correct positioning. These centerlines may be painted on the tarmac and/or can be virtual lines provided on a display viewed by the pilot. Different centerlines may be used for different types of aircraft based on size of the aircraft and docking guidance information can be provided according to the appropriate corresponding centerline.

Centerline paths may follow a straight line with respect to the docking area but can also follow a curve indicating to a pilot that the aircraft must turn as it approaches the docking area. The sensor 102 can capture data of the aircraft as it approaches the docking area. The collected sensor data can aid in determining three dimensional information of the aircraft for creating a simulated model to track and provide guidance to the aircraft, from entry into a ramp area to a final docking position.

Although LIDAR sensing is discussed primarily herein, it should be noted that other light/radio based detection and ranging methodologies may be used to provide the functions of the LIDAR system described herein. Suitable LIDAR/Radar sensing methodologies include those that scan the aircraft with a LIDAR/Radar sensor by sweeping the laser/radio signals across the aircraft in at least one of a horizontal or vertical direction or both. One suitable laser sensing system is a light detection and ranging (LIDAR) system and a suitable radio signal scanning system is Radio Detection and Ranging (RADAR).

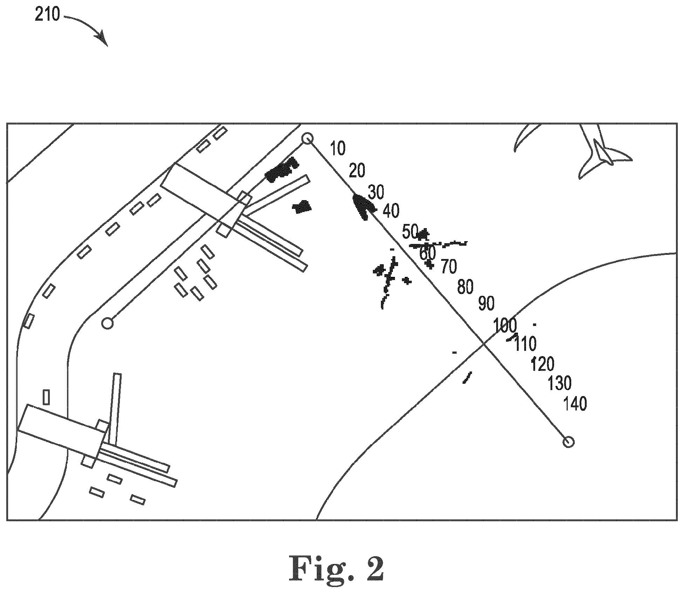

Figure 2 illustrates a top view of captured sensor data of an incoming aircraft in accordance with an embodiment of the present disclosure. The captured sensor data can be captured via sensor 102 as described in relation to Figure 1.

The captured sensor data, represented by the black shaded dots illustrated in image 210, can be captured via a three dimensional LIDAR sensor in real-time as the aircraft approaches the docking area. The aircraft path can be tracked as it approaches the docking area via curved centerlines. The captured sensor data can be limited to the field of view of the fixed position of the LIDAR sensor within the docking area. However, in some embodiments, the LIDAR sensor can be a moveable sensor that can capture data from various locations.

When the aircraft enters a target area of interest (e.g, the docking area), the LIDAR sensor can emit light rays that are then reflected off of the surface of the aircraft to produce data points corresponding to the position and location of the aircraft with respect to the docking area. The geometric structure of the aircraft can be derived from the LIDAR data and displayed to the pilot of the aircraft or to an air traffic control tower for tracking the incoming aircraft with respect to the docking area. When the aircraft enters the target area of interest, positioning guidance in the form of a virtually generated distance gauge can be displayed to a pilot for aid in docking the aircraft as seen in Figure 2.

The data captured via the LIDAR sensor in real-time can be limited based on the fixed position of the LIDAR sensor within the docking area. As the aircraft approaches the docking area, certain characteristics and features of the aircraft may not be captured by the sensor due to field of view obstructions. For example, a wing of the aircraft furthest from the sensor location may not be captured by the sensor as the aircraft turns around a curved centerline because the body of the aircraft is obstructing the view of that particular wing in relation to the sensor position. In this way, the captured sensor data can produce incomplete images of the aircraft as the aircraft moves along a trajectory to approach the docking area.

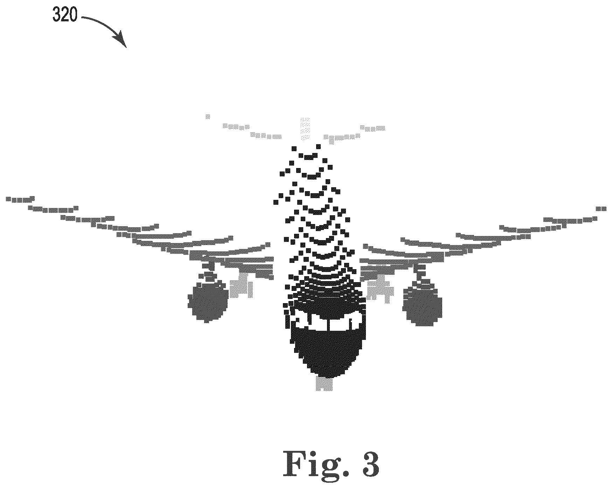

Figure 3 illustrates an example of simulated LIDAR data in accordance with an embodiment of the present disclosure. The simulated LIDAR data in Figure 3 is simulated as a three dimensional point cloud 320 of an aircraft. The LIDAR data is simulated to be in the docking area within which an actual LIDAR sensor is positioned. This way, the simulated LIDAR data is simulated in the same field of view as the captured sensor data as described in relation to Figures 1 and 2.

The LIDAR data is simulated corresponding to a LIDAR sensor positioned within the docking area of an airport. Different viewpoints of the aircraft can be taken by placing a virtual camera at different locations to capture various positions of the aircraft. The different viewpoints captured can then be used to simulate different angles of the aircraft as simulated LIDAR data. Typically, a LIDAR sensor is mounted and remains in a fixed position within a docking area of an airport. Information corresponding to the calibration of this sensor can be used to simulate the LIDAR data in the same position as the LIDAR sensor within the docking area.

The simulated LIDAR data can be generated as a three dimensional point cloud 320 of the aircraft as illustrated in Figure 3. The three dimensional point cloud 320 can be used as a model of an aircraft. For instance, the point cloud can correlate the simulated LIDAR data points to points in a two dimensional image of the aircraft. The three dimensional simulated model of the aircraft can then be moved over a known trajectory of an incoming aircraft to derive positioning information of the aircraft in relation to the docking area. The trajectory of an incoming aircraft can correspond to the centerlines displayed on the tarmac. Aircraft follow these centerlines as they approach the docking area to avoid obstacles present within a docking area of an airport. Any deviation from these centerlines is typically minimal and does not influence the known trajectory of the aircraft with respect to the embodiments described herein. The trajectory of the incoming aircraft can also be retrieved from an air traffic control tower, for example, or captured via cameras/sensors placed within the docking area.

The simulated three dimensional LIDAR data and trajectory information can then be used to generate a simulated position of an aircraft according to a desired viewpoint and visibility. This simulated LIDAR data is not limited to the fixed position of the LIDAR sensor within the docking area.

The simulated LIDAR data can be generated prior to the arrival of an aircraft within the docking area of an airport. The simulated LIDAR data can be generated by any suitable computing device (e.g., computing device 761 described in Figure 7). The computing device can be remotely located from the airport or physically located within the airport. The simulated LIDAR data can be stored in a cloud for access at any point before, during, or after docking is initiated of an aircraft.

The simulated LIDAR data can be generated as a three dimensional point cloud 320 of an aircraft according to an actual position of a LIDAR sensor within the docking area. As illustrated in Figure 3, the three dimensional point cloud 320 may not include a complete image of the aircraft and specific features of the aircraft, such as the tail, that may be difficult to capture due to the nature of LIDAR technology. LIDAR technology is influenced by various factors within the field such as noise, inclement weather conditions, and low visibility that affect the captured image of the aircraft. As such, the reference points generated by LIDAR sensors are minimal. In this way, a more complete image of the aircraft is needed for more accurate positioning information.

In embodiments of the present disclosure, an image processing system is used to create the simulated three dimensional LIDAR data, such as the computing device as described in more detail with reference to Figure 7. In some embodiments, the embodiment includes machine learning (e.g., deep learning) capabilities wherein the simulated three dimensional LIDAR data is used to derive an accurate aircraft model and/or detection of incoming aircraft.

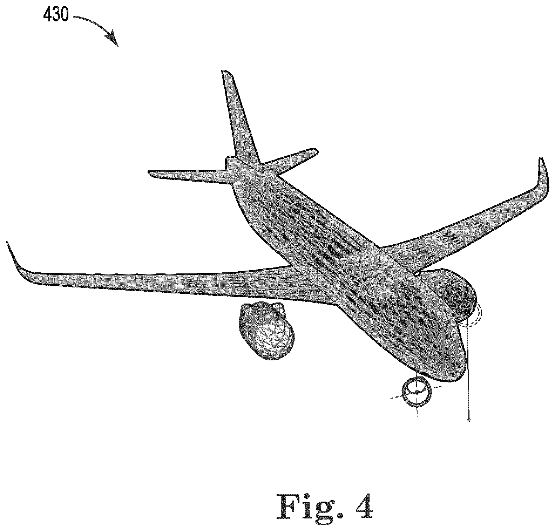

In some embodiments, the LIDAR point cloud creation of Figure 3, and simulated LIDAR data described in connection with Figure 4 4 can be real-time processes, depending on the computing and networking speed of the docking system, which derives the speed and position of the aircraft. This will provide the input to the central docking system to provide clear information to use in pilot unit display messages that can be used to provide directional and/or speed guidance to the pilot.

Figure 4 illustrates an example of simulated data in accordance with an embodiment of the present disclosure. The simulated data of Figure 4 can be simulated LIDAR data. The simulated data of Figure 4 can be LIDAR data simulated and displayed as a polygonal mesh (e.g., wire mesh) 430 of an aircraft.

The simulated three dimensional model can be simulated LIDAR data generated in the same position as a LIDAR sensor within a docking area of an airport. The simulated LIDAR data can be simulated to generate a three dimensional wire mesh 430 depiction of an aircraft using simulated LIDAR returns based on the LIDAR sensor position within the docking area. The LIDAR data can be simulated according to a known position of an aircraft using calibration information of the LIDAR sensor within the docking area.

The three dimensional LIDAR data can be simulated to create a wire mesh 430 of an aircraft to derive the geometry and structure of the aircraft. The wire mesh 430 includes sections (e.g, subdivisions) that are illustrated as a polygons or squares. These sections represent the resolution in which a certain LIDAR ray reflection would be expected from what is sent from an actual LIDAR sensor. This geometry of an aircraft is then used to simulate how the reflections from the number of rays sent at numerous angles and positions of a LIDAR sensor can be used to simulate an image of an aircraft.

The simulated three dimensional model is generated in a "fixed" position according to the calibration information retrieved of the LIDAR sensor positioned within the docking area. The simulated three dimensional model can be moved along the known trajectory of an incoming aircraft to derive position information of the aircraft with respect to the docking area.

The simulated LIDAR data and model can be generated prior to the arrival of an aircraft within the docking area of an airport. The simulated LIDAR data can be simulated by any suitable computing device (e.g., computing device 761 of Figure 7). The computing device can be remotely located from the airport or physically located within the airport. The simulated LIDAR data can be stored in a cloud for access at any point before, during, or after docking is initiated of an aircraft.

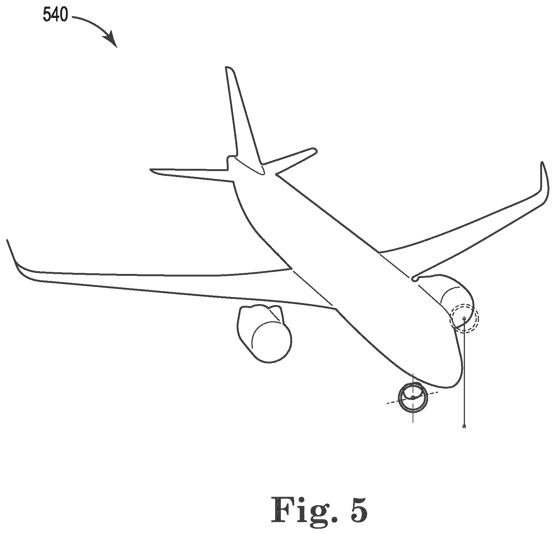

Figure 5 illustrates an example of a simulated image 540 in accordance with an embodiment of the present disclosure. The simulated image illustrated in Figure 5 can comprise simulated three dimensional LIDAR data of an aircraft projected over a two dimensional image of the aircraft.

The three dimensional simulated LIDAR data as described in relation to Figures 3 and 4 can be projected as a two dimensional image. The three dimensional simulated LIDAR data can be projected over a two dimensional image to generate a complete simulated two dimensional image 540 for use in tracking, detection, and docking of an aircraft. The three dimensional simulated LIDAR data can be projected as a two dimensional image 540 by overlaying the three dimensional data onto a two dimensional image of the aircraft. The three dimensional data can be positioned on the two dimensional image by lining up features of the aircraft such as the wheel position to create an accurate depiction of the aircraft.

Different two dimensional images of the aircraft can be captured by placing virtual cameras at different positions. These captured two dimensional images can be stored in a memory for retrieval upon generation of the simulated two dimensional images.

The simulated two dimensional images 540 can be used for training a perception model to derive the wheel position and bounding box of an aircraft. With the complete simulated two dimensional images 540 combining the simulated three dimensional LIDAR data with captured two dimensional images of the aircraft, accurate positioning information can be derived. The perception model can be fed the simulated two dimensional images to accurately locate the position of aircraft features of interest such as the wheel position, for example.

The simulated two dimensional image can be trained as a regression problem using machine learning and trained to detect position information of the aircraft. The perception model can be any suitable statistical model to derive position information. A suitable perception model can be a convolutional neural network, for example, but embodiments are not limited to a certain perception model.

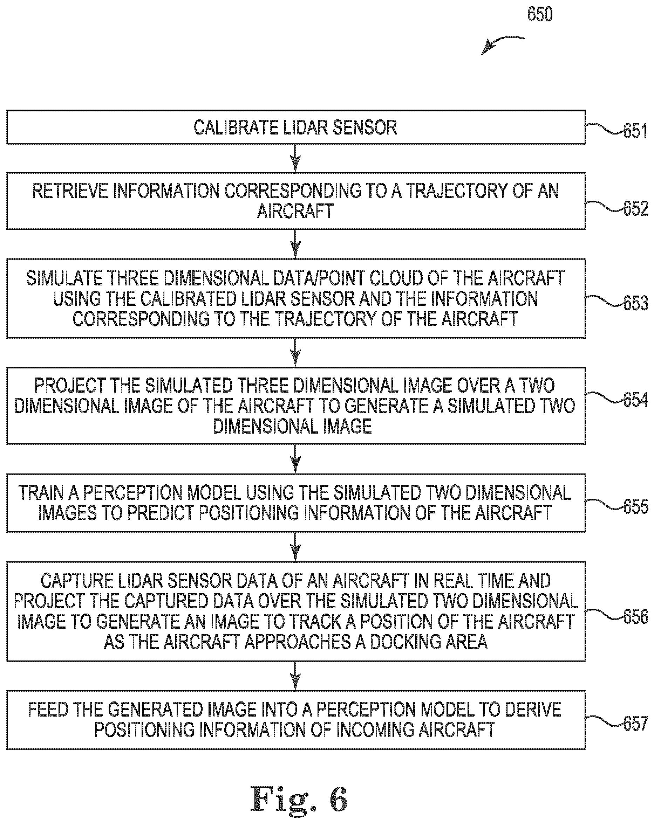

Figure 6 illustrates a flow diagram of a method for detecting, tracking, and docking an aircraft in accordance with an embodiment of the present disclosure. Although the method 650 is illustrated in a particular sequence, embodiments are not limited as such and operations can be performed in varying order unless stated otherwise. Some or all portions of method 650 can be performed by a computing device, such as, for instance, computing device 761 of Figure 7.

At block 651, the method includes calibrating a LIDAR sensor. As described previously, embodiments are not limited to a particular number of sensors but one LIDAR sensor is used for illustration purposes throughout this example. Calibration of the LIDAR sensor can include manual or electronic calibration to adjust a particular setting or position of the sensor. The LIDAR sensor is positioned within the docking area of an airport and is typically mounted in a fixed position with a particular field of view. Once the calibration of the LIDAR sensor is known, the calibration information can be used to simulate three dimensional LIDAR data of an aircraft from the same field of view, as described in more detail with respect to Figures 3 and 4.

At block 652, the method includes retrieving information corresponding to a trajectory of an aircraft. The information can correspond to the trajectory of an aircraft approaching a docking area, for example. The trajectory of the aircraft can follow a known path along a centerline or a path that deviates from the centerline. The information can be a collection of data corresponding to the trajectory of the aircraft and can be retrieved from an air traffic control tower, for example.

At block 653, the method includes simulating three dimensional data/point cloud of the aircraft using the calibrated LIDAR sensor and the information corresponding to the trajectory of the aircraft. A three dimensional image point cloud can be generated using information corresponding to the calibration of a LIDAR sensor within a docking area such that the simulated three dimensional point cloud is generated with the same field of view as the LIDAR sensor positioned within the docking area. The simulated three dimensional LIDAR data can be moved along the known trajectory of the aircraft to determine positioning information of the aircraft. The simulated three dimensional LIDAR data can be viewed as a simulated three dimensional image of the aircraft.

At block 654, the method includes projecting the simulated three dimensional image over a two dimensional image of the aircraft to generate a simulated two dimensional image. The simulated two dimensional image can be used as a complete model of the aircraft for use by a pilot in navigating the aircraft during docking.

At block 655, the method includes training a perception model using the simulated two dimensional images to predict positioning information of the aircraft. The simulated two dimensional images can be fed into a perception model to train the perception model to accurately derive positioning information of specific features of the aircraft, such as wheel position or a bounding box of the aircraft. Various perception models or statistical methods may be used, such as a convolutional neural network, for example.

At block 656, the method includes capturing LIDAR sensor data of an aircraft in real time and projecting the captured data over the simulated two dimensional image to generate an image to track a position of the aircraft as the aircraft approaches a docking area. The LIDAR sensor data of an aircraft is captured in real time by a LIDAR sensor positioned within the docking area. The LIDAR sensor sends out light signals which are then reflected off of the surface of the aircraft. These LIDAR returns can be projected onto the simulated two dimensional images generated at block 654. The LIDAR data captured in real time and the simulated two dimensional images can be used in tracking a position of the aircraft while the aircraft is approaching the docking area.

The generated image of block 656 can be displayed in real-time to a pilot of the aircraft to provide navigation guidance to the pilot as the aircraft is approaching the docking area.

At block 657, the method includes feeding the generated image into a perception model to derive positioning and height information of incoming aircraft. The perception model can be a convolutional neural network (e.g., CNN), for example, or any suitable perception model to derive positioning information of the incoming aircraft.

Figure 7 illustrates a system for use in detecting, tracking, and docking an aircraft in accordance with an embodiment of the present disclosure. The system 760 includes a computing device 761 having a number of components coupled thereto. The computing device 761 includes a processor 762 and memory 763. The memory 763 can include various types of information including data 765 and instructions 764 executable by the processor 762, discussed herein.

Memory and/or the processor may be located on the computing device 761 or off the device, in some embodiments. The system 760 can include a network interface 766. Such an interface can allow for processing on another locally networked computing or other device or devices on other networks. For example, the network interface can include a computing device having Internet access for allowing access to an airport computing system or to access other computing resources to access flight information.

As illustrated in the embodiment of Figure 7, a system 760 can include one or more input and/or output interfaces 767. Such interfaces can be used to connect the computing device 761 with one or more input or output devices. These devices can be used to receive or access data that can be used to accomplish the functions described herein.

For example, in the embodiment illustrated in Figure 7, the system 760 can include connectivity to a LIDAR sensing device 768, an input device 769 (e.g., a keyboard, mouse, touch screen, etc.), a display device 770 (e.g., a monitor) and/or one or more other input devices. The input/output interface 767 can receive data, storable in the data storage device (e.g., memory 763), for example, representing the sensor data or aircraft type information discussed herein, among other information.

The processor 762 can be configured to execute instructions stored in memory to execute functions of the docking system and/or provide the functionalities described herein, and can provide those details to a display 770 (e.g., on a graphical user interface (GUI) running on the processor 762 and visible on the display 770).

Such connectivity can allow for the input and/or output of data and/or instructions among other types of information. Although some embodiments may be distributed among various computing devices within one or more networks, such systems as illustrated in Figure 7 can be beneficial in allowing for the query, analysis, and/or display of information discussed herein.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A method for tracking an aircraft (101), comprising:
capturing, by a light detection and ranging (LIDAR) sensor (102, 702), LIDAR sensor data of an aircraft while the aircraft (101) is approaching a docking area (100) of an airport;
receiving, from the LIDAR sensor (102, 702), the sensor data of the aircraft while the aircraft (101) is approaching the docking area (100);
retrieving, by a computing device (761), a simulated two dimensional image (540) of the aircraft generated based on simulated data of the aircraft (101);
tracking, by the computing device (761), a position of the aircraft while the aircraft (101) is approaching the docking area (100) using the LIDAR sensor data and the simulated two dimensional image (540); and
displaying an image including the position of the aircraft while the aircraft (101) is approaching the docking area (100) to provide navigation guidance to a pilot.

2. The method of claim 1, wherein the simulated two dimensional image (540) is generated by:
simulating LIDAR data as a three dimensional image of the aircraft; and
projecting the simulated LIDAR data over a two dimensional image of the aircraft.

3. The method of claim 2, wherein the method further includes:
calibrating the LIDAR sensor (102) to capture the LIDAR sensor data of the aircraft (101) while the aircraft (101) is approaching the docking area (100);
receiving information corresponding to a trajectory of the aircraft; and
simulating the three dimensional image of the aircraft using the calibrated sensor and the information corresponding to the trajectory of the aircraft.

4. The method of claim 3, wherein the three dimensional image is simulated prior to an initiation of a docking operation of the aircraft.

5. The method of claim 1, wherein the method further includes:
feeding the simulated two dimensional image (540) into a perception model; and
predicting positioning information of the aircraft using the perception model.

6. The method of claim 5, wherein the positioning information includes information corresponding to a wheel position and bounding box of the aircraft.

7. The method of claim 5, wherein the simulated two dimensional image (540) is fed into the perception model and moved along a known trajectory of the aircraft to train the perception model.

8. The method of claim 7, wherein the trained perception model is used to predict a position and height of the aircraft as part of the provided navigation guidance to the pilot.

9. The method of claim 1, wherein the image is displayed in real-time while the aircraft (101) is approaching the docking area (100).

10. The method of claim 1, wherein the LIDAR sensor data is captured by a moveable LIDAR sensor (102, 702) from various locations.

11. A system for tracking an aircraft (101), comprising:
a light detection and ranging (LIDAR) sensor (102, 702) configured to capture LIDAR sensor data of an aircraft while the aircraft (101) is approaching a docking area (100) of an airport; and
a computing device (761) configured to:
receive the captured LIDAR sensor data from the sensor (102, 702);
store a simulated two dimensional image (540) of the aircraft generated based on simulated data of the aircraft;
track a position of the aircraft while the aircraft (101) is approaching the docking area (100) using the LIDAR sensor data and the simulated two dimensional image (540); and
cause a display of an image including the position of the aircraft while the aircraft (101) is approaching the docking area (100) to provide navigation guidance to a pilot.

12. The system of claim 11, wherein the computing device (761) is configured to generate the simulated two dimensional image (540) by using a point cloud to correlate simulated LIDAR data points to points in a two dimensional image of the aircraft.

13. The system of claim 11, wherein the system includes a virtual camera configured to collect different viewpoints of the aircraft as it is approaching the docking area (100).

14. The system of claim 11, wherein the image displayed is generated by projecting the captured LIDAR sensor data onto the simulated two dimensional image (540).

15. The system of claim 11, wherein the computing device (761) is configured to feed the simulated two dimensional image (540) into a perception model and predict positioning information of the aircraft using the perception model.
